# EUROPEAN PATENT APPLICATION

(11) **EP 4 553 019 A1**
(43) Date of publication of application: **14.05.2025**
(21) Application number: 23208545.6
(22) Date of filing: 08.11.2023
(51) Int. Cl.: B65G 54/02

(54) **CARRIER MODULE FOR A LINEAR MOTOR CONVEYING SYSTEM AND LINEAR MOTOR CONVEYING SYSTEM**

(71) Applicant: Robert Bosch GmbH, 70442 Stuttgart (DE)
(72) Inventor: Van Der Woude, Lars, 5644 EA Eindhoven (NL); Tielenm Niels, 4871 LM Etten-Leur (NL); Peters, Piet, 5731 EN Mierlo (NL); Aarden, Walter, 4891 ZJ Rijsbergen (NL); Faassen, Ronald, 5351 LA Berghem (NL); Spruit, Louis, 5502 CA Veldhoven (NL)

(57) **Abstract**

The invention relates to a carrier module (350) for a linear motor conveying system, wherein said carrier module comprises a carrier component (353) and at least two wheels (351.2), wherein said carrier module (350) is configured to be received between a first side part and a second side part of a track module, wherein said carrier module is movable in a conveying direction when received in the track module, wherein at least a first one of the at least two wheels and at least a second one of the at least two wheels are arranged at the carrier component opposite to each other, such that the at least one first wheel faces the first side component and the at least one second wheel faces the second side component, and match with a respective bearing surface of the track module, when received in the track module, wherein one or more of the at least two wheels are pivotable wheels, wherein the carrier module (350) comprises, for the one or each of the more pivotable wheels, a wheel support means (360), wherein the wheel (351.2) is supported at the wheel support means (360), such that a rolling motion of the wheel is possible, and wherein said wheel support means (360) is supported, directly or indirectly, at the carrier component (353) so as to be pivotable about a pivot axis (370) within a pre-defined pivot range, said pivot axis (370) being parallel to the conveying direction (R). The invention also relates to such a linear motor conveying system.

## Description

The present invention relates to a carrier module for a linear motor conveying system, and to a linear motor conveying system for, e.g., carrying a payload. The linear motor conveying system comprises one or more track modules and one or more carrier modules to be guided in the one or more track modules. Documents US 10 974 914 B2 and US 10 894 675 B2 show carrier modules having fixed wheels.

### Background of the invention

Linear conveying systems like linear motor conveying systems can be used in different applications, e.g., industrial applications. For example, linear motor conveying systems can be used in the field of high-speed conveyance solutions for in-machine and inter-machine transportation. Such solutions can be inverted linear motor systems, which can control small workpiece carriers accurately and with high movement dynamics. The carriers themselves can be passive.

### Disclosure of the invention

According to the invention, a carrier module, and a linear motor conveying system with the features of the independent claims are proposed. Advantageous embodiments are subject-matter of dependent claims and of the following description.

The invention relates to linear motor conveying systems and carrier modules used therein. Such a linear motor conveying system comprises one or more track modules and one or more carrier modules to be guided in the one or more track modules. The track modules can be standardized modules, several of such modules can be connected to each other to form a track system. A track module has or defines at least one conveying path, i.e., a path along which the carrier modules are to be guided and moved. Such track modules can be of different types, e.g., straight modules, curve modules, and switch modules. Such different modules in required numbers can be connected to form a track system according to specific needs. While straight modules and curve modules typically have one conveying path, a switch module can have a conveying path split into two conveying paths. A carrier module received in such track module can then be moved along such conveying path in a conveying direction. With a typical arrangement of such track modules at the ground, the conveying direction is horizontally oriented.

An embodiment of the invention relates to such a carrier module. Such carrier module comprises a carrier component and at least two wheels. Typically, a carrier has more wheels, e.g., four or six. The wheels can be (rotatably) mounted on respective legs of the carrier component, for example, i.e. such that a rolling motion of the wheel is possible. The carrier module is configured to be received between a first side component and a second side component of a track module. Track modules will be described in more detail later. At least a first one of the two wheels and at least a second one of the two wheels are arranged at the carrier component opposite to each other, such that the at least one first wheel faces the first side component and the at least one second wheel faces the second side component, when received in the track module. In particular, the wheels contact a respective bearing surface of the respective first or second side part, when the carrier module is received in the track module. As will be explained later, a carrier module can comprise four or six wheels, with two or three per side.

In an embodiment, said carrier module further comprises two counterpart electro-magnetic motor units or motor components. A first one of the two counterpart electro-magnetic motor components and a second one of the two counterpart electro-magnetic motor components are arranged at the carrier component opposite to each other, such that the first counterpart electro-magnetic motor component faces a first electro-magnetic motor component of the track module and the second counterpart electro-magnetic motor component faces a second electro-magnetic motor component of the track module, when received in the track module. This allows electro-magnetic conveying of the carrier module.

One or more of the at least two wheels of the carrier module are pivotable wheels. In an embodiment, all wheels are pivotable wheels, i.e., the carrier module can have, for example, two, four or six pivotable wheels. The carrier module comprises, for the one or each of the more pivotable wheels, a wheel support means. The wheel (i.e., the pivotable wheel) is supported at the wheel support means, such that a rolling motion of the wheel is possible. For example, the wheel support means can have a rod-shaped bearing support, on which the wheel is rotatable supported. Further, said wheel support means is supported, directly or indirectly, at the carrier component so as to be pivotable about a pivot axis within a pre-defined pivot range, said pivot axis being parallel to the conveying direction. In other words, a pivotable wheel has a hinged suspension; such wheel can, thus, also be called a hinged wheel.

As mentioned, several track modules are typically assembled. To deal with thermal expansion of the track modules (also called segments) due to heat generation under load, there is typically a gap provided between the track modules. Since the bearing surface - this can be formed by a rod or other guide rail - is part of the track module, there is also a gap between the guide rails. The pivotable wheels allow the carrier module to deal with these gaps and (other) tolerances.

In an embodiment, said carrier module further comprises, for one or each of the pivotable wheels, a first dowel pin, wherein said wheel support means is supported at the carrier component by means of said first dowel pin so as to be pivotable about said pivot axis. This first dowel pin allows support and pivoting. For example, bushings or the like can also be provided.

In an embodiment, said carrier module further comprises, for one or each of the pivotable wheels, a second dowel pin, wherein said wheel support means comprises a through hole, in which the second dowel pin is provided. A diameter of the through hole is larger than a diameter of the second dowel pin, such that said wheel support means is pivotable about said pivot axis within said pre-defined pivot range. Choosing the diameter of the through hole allows choosing an appropriate pivot range. It is noted that the through hole does not necessarily have to be of round cross section, an elongated cross section is also possible.

In an embodiment, said carrier module further comprises, for one or each of the pivotable wheels, elastic means (e.g., one or multiple elastic components or elements), provided between the second dowel pin and the wheel support means, and configured to provide a pre-tension force to the wheel support means. For example, these elastic means can comprise two O-rings provided on the second dowel pin, each between a part of the wheel support means and a part of the carrier component. Such O-ring can be made of rubber or rubber like or other elastic material.

Thus, such hinged suspension can be realized by the wheel support means, which is hinged in the carrier to allow for a rotation around the pivot axis (the movement direction). As a result, if each wheel is a pivotable wheel, each wheel constrains one degree of freedom (DOF), defined by the contact between the guide rails and wheel, and the location of the rotation point. Since the carrier module is exactly constrained, in case of a misalignment the wheels will remain in contact and by doing this movement multiple time, this results in good repeatability.

In an embodiment, the carrier module is configured to push a pre-tensioned one of the at least one first wheel and the at least one second wheel, in an outward direction, towards a respective one of the first side component and the second side component, and away from the other one of the at least one first wheel and the at least one second wheel that is arranged opposite. For example, the carrier module can comprise, for said pre-tensioned wheel, an additional wheel support means carrying the pre-tensioned wheel, wherein the pre-tensioned wheel is pivotally supported by means of the additional wheel support means. Said additional wheel support means is supported at the carrier component. It is noted that, in general, the pre-tensioned wheel does not have to be a pivotable wheel but it can be; in the following examples described the pre-tensioned wheel is a pivotable wheel.

When the carrier module comprises six wheels, then the track modules can comprise six bearing surfaces or guide rails, which means that each of the wheels of the carrier module runs over an individual guide rail. To prevent the carrier module from being over constrained, only five degrees of freedom need to be constrained and for this additional design measures can be included in the carrier module. The pre-tensioned wheel (when being a pivotable wheel) allows to remove the constraint from a further degree of freedom, i.e., decrease the number of constrained degrees of freedom from six to five.

For a track module of the switch type, the wheel support means can comprise the elastic means (e.g., an O-ring) on the end of stroke, i.e. at the second dowel pin. Because in the nominal design, there can be a slight offset between the O-ring support and the end of stroke, a pretension force could be required. This force results in a pre-defined orientation when the wheel is disconnected from the guide rail. For the switch type track module, this implies that the wheel is always in the same position, which makes the catch of the wheel after switching easier. This design results in a preload force, provides an end of stroke, and provides damping to the wheel support.

Within precision mechanics, it is important to constrain a sufficient number of independent coordinates (degrees of freedom). A goal can be to obtain an exactly constrained (or statically determined) body, where the suspension allows for only the desired degree(s) of freedom to be unconstrained. The advantage of an exactly constrained system is that it is less sensitive to manufacturing tolerances and allows for more predictable behaviour. For the carrier, this means that, except for the movement direction, all other degrees of freedom should be constrained.

A carrier module having six wheels that run along six guide rails should be unconstrained in the movement or conveying direction. A standard wheel constrains two degrees of freedom and thus the carrier module would be over constrained. This can be resolved by adding a hinge (the wheel support means allowing pivot) and ensuring that the wheel only contacts the rail in such way the normal of the contact point goes through the hinge. This reduces the number of degrees of freedom to the wheels to one. Additionally, one of the wheels can be pre-tensioned or preloaded to remove its constrained degrees of freedom. When these measures are combined, the number of constrained degrees of freedom of the carrier module can be reduced from twelve to five, resulting in unconstrained degrees of freedom in the movement direction of the carrier module.

When switching in the switch type track module, the carrier module is temporality only supported at one side and thus three of the wheels (i.e., on one side) do not contact the guide rail or bearing surface during that time. After the switching is completed, these wheels need to be caught again by the rail. The end of stroke (i.e., the pre-defined pivot rang) allows to add robustness to the catching and to make sure that the wheels cannot move to a position where they cannot be caught again.

Additionally, the elastic means in the wheel support means (e.g., an O-ring) on the end of stroke provides a pretension force between the O-ring support and the end of stroke. This force can be needed to get a pre-defined orientation while the carrier module is switching, and the wheel is not supported. Furthermore, the O-ring or other elastic means provides damping to the wheel support means as well.

Another embodiment of the invention relates to a linear motor conveying system, comprising one or more track modules, and one or more carrier modules as described above, to be received and guided in the one or more track modules. In order to connect several track modules to each other, appropriate connection means like screws or form fittings can be provided for mechanical connection. Also, electrical connection of the electro-magnetic motor components should be provided.

In an embodiment, said one or each of said more track modules comprises a track component, and at least two, or four or six, bearing surfaces, one, two or three per side. Said track component comprises, along at least part of a conveying path, the first side part, the second side part and a bottom part, wherein the first side part and the second side part are arranged opposite to each other. The first ones of the bearing surfaces are arranged at or formed integrally with the first side part, and the second ones of the bearing surfaces are arranged at or formed integrally with the second side part, such that the first bearing surfaces and the second bearing surface face each other. The track module can be configured such that the at least one first bearing surface matches with at least a first wheel of the carrier module, and that the at least one second bearing surface matches with at least a second wheel of the carrier module.

In an embodiment, the linear motor conveying system further comprises a controlling system for controlling the linear motor conveying system to move the one or each of the more carrier modules within the one or more track modules. This can comprise controlling (and powering) the electro-magnetic motor components, e.g., the coils, of the track modules in appropriate way.

The track module allows receiving a state of levitation of the carrier module between the two side parts of the track module, which reduces cogging. Switches (i.e., track modules of switch type) can be taken easily, other than with track modules providing guidance from one side only, for example This also enables high speed curves. Having guidance only from one side, for example, would result in limited speed in curves, due to the centrifugal force which acts upon the carrier module while moving through a curve. Additionally, symmetry also reduces the complexity of the switch design.

In an embodiment, such track module further comprises two electro-magnetic motor components, each preferably comprising one or more electric coils. A first one of the two electro-magnetic motor components is arranged at the first side part, and a second one of the two electro-magnetic motor components is arranged at the second side part, such that the first electro-magnetic motor component and the second electro-magnetic motor component face each other. Preferably, the track module is configured such that the first electro-magnetic motor component matches with a first counterpart electro-magnetic motor component, preferably comprising one or more permanent magnets, of the carrier module, and that the second electro-magnetic motor component matches with a second counterpart electro-magnetic motor component, preferably comprising one or more permanent magnets, of the carrier module.

Having guidance only from one side, for example, would require one-sided motor components. Due to the attraction force between the magnets and coils, if the carrier module was only powered on one side, there is quite some pressure on the wheels. This means that the wheels (for example, made of plastic) would wear down relatively fast.

Another shortcoming of having guidance on one side only that is overcome, is that the carrier module was only held to the system by the attraction force of the magnets to the coils. This not only leads to problems in the curve, but also to a limited load which can be transported. Furthermore, the centre of mass of the load needed to be above the carrier module as much as possible. These problems do not or by far less occur with the system provided within the present invention.

In an embodiment, the first electro-magnetic motor component is fixed to the first side part by means of gluing and/or screwing, and/or the second electro-magnetic motor component is fixed to the second side part by means of gluing and/or screwing. This allows simple, fast and safe fixation.

In an embodiment, the track component (i.e., the first and second side part and the bottom part) is formed in one piece. This allows easy processing and manufacturing. In embodiment, the track component is made of aluminum, preferably extruded aluminum. This allows easy processing and manufacturing; in addition, aluminium allows a light weight track module. It is noted that the track component can have a structure with struts or the like, further reducing the weight and improving stability.

Further advantages and embodiments of the invention result from the description and the attached drawing.

It goes without saying that the features mentioned above and those still to be explained below can be used not only in the combination specified in each case, but also in other combinations or on their own, without departing from the scope of the present invention.

The invention is shown schematically in the drawing using an exemplary embodiment and is described in detail below with reference to the drawing.

### Brief description of the drawing

- Fig. 1: shows a linear motor conveying system in a perspective view;
- Fig. 2: shows a switch type tack module in a perspective view;
- Fig. 3a: shows a track module and a carrier module in a perspective view;
- Fig. 3b: shows the track module and the carrier module of Fig. 3a in a cross section;
- Fig. 3c: shows the carrier module of Fig. 3a in a perspective view;
- Fig. 3d: shows the carrier module of Fig. 3c in a more detailed view;
- Fig. 3e: shows the carrier module of Fig. 3a in an exploded view; and
- Figs. 3f, 3g: show parts of the carrier system of Fig. 3e in more detail in a cross section;

### Detailed description of the drawing

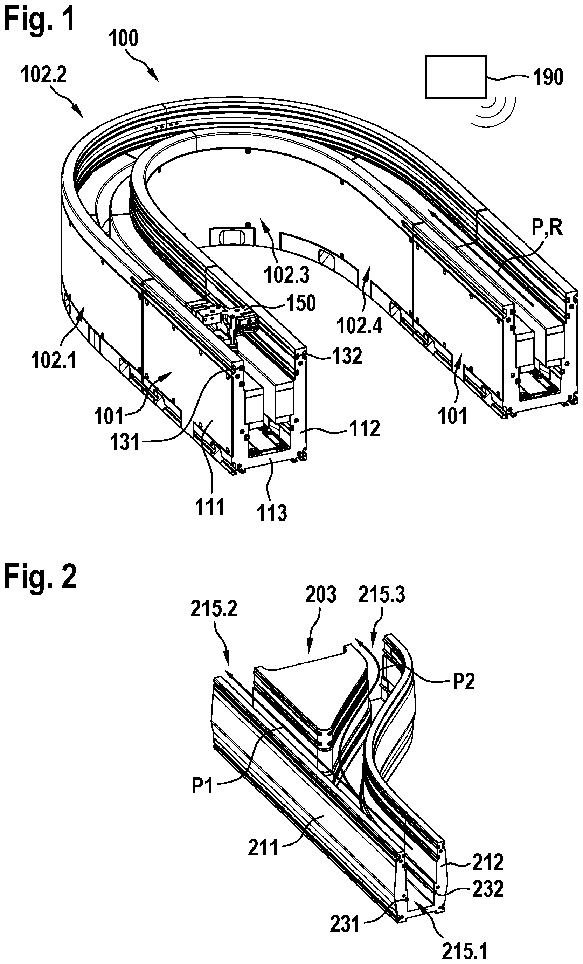

Fig. 1 schematically illustrates a linear motor conveying system 100 in a perspective view. The linear motor conveying system 100 comprises, by means of example, several track modules. Depending on the needs of a particular application for the linear motor conveying system, different types and numbers of track modules can be provided and also connected to each other to provide a track system. Types of track modules are, for example, straight modules, curve modules and switch modules.

By means of example, two track modules 101 are straight modules, and four parts or regions 102.1, 102.2, 102.3, 102.4 form a curve module, i.e., the curve module can be a single track module having a single track component. The straight modules 101 are both identical, in the example shown in Fig. 1. It is noted, however, that straight modules can have a different length, where a length is to be seen in moving or conveying direction R along a conveying path P, indicated for a straight module 101 in Fig. 1.

The parts or regions 102.1, 102.2, 102.3, 102.4 indicate, by means of example, regions having different radii and/or curve shapes.

The straight module 101 at the lower left side in Fig. 1 will be described in more detail. The track module 101 comprises a track component 110, and at least two bearing surfaces 131, 132. By means of example, six bearing surfaces are shown in Fig. 1, while only two of them are indicated with a reference numeral.

Further, the track component 110 comprises a first side part 111, a second side part 112 and a bottom part 113, wherein the first side part 111 and the second side part 113 are arranged opposite to each other.

At least a first one of the at least two bearing surfaces (here, e.g., bearing surface 131) is arranged at or formed integrally with the first side part 111, and at least a second one of the at least two bearing surfaces (here, e.g., bearing surface 132) is arranged at or formed integrally with the second side part 112, such that the at least one first bearing surface 131 and the at least one second bearing surface 132 face each other.

By means of example, the bearing surfaces are formed by support structures like rods, arranged in or inserted into recesses in the first side part 111 and the second side part 112. In general, however, such bearing surface can also be formed by the first side part 111 and the second side part 112, e.g., by having specific shapes.

It is noted that this way of how a track module is formed, does not only apply to straight module 101 but also to other types of modules like the curve module.

Each of the straight modules and the curve module shown in Fig. 1, have a conveying path, although only shown for one straight module 101, from a respective first to a respective second end. When the track modules are connected to each other, the individual tracking paths are also connected to from a cumulated conveying path, along which the carrier modules are guided and conveyed. Note that carrier modules can be moved or conveyed in both directions of a conveying path, either following the direction of the arrow indicating the conveying path P or reverse. As can be seen from Fig. 1, for example, a conveying path P also provides or defines conveying directions R, again the both directions mentioned.

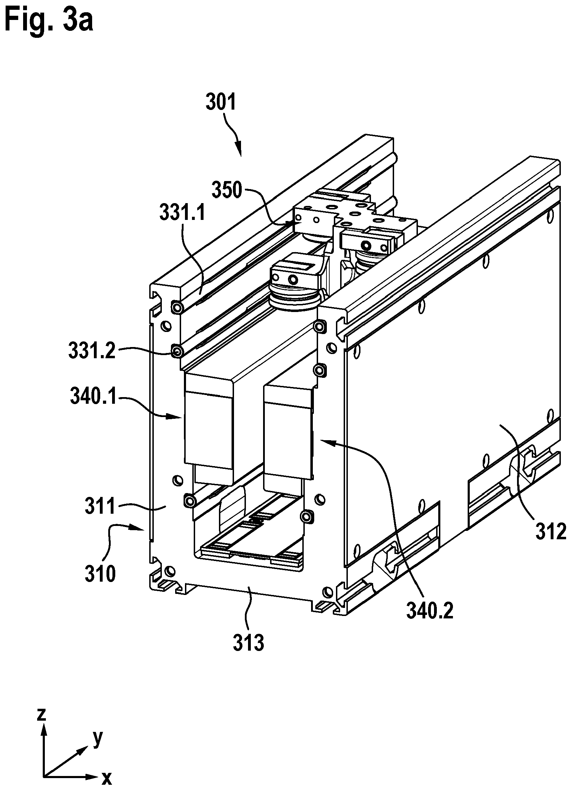

Further, the linear motor conveying system 100 comprises, by means of example, several carrier modules 150. The track module 101 is configured to receive such a carrier module 150 between the first side part 111 and the second side part 112, in particular, such that the at least one first bearing surface 131 matches with at least a first wheel of the carrier module 150, and that the at least one second bearing surface 132 matches with at least a second wheel of the carrier module 150. This is shown in Fig. 1 but will be illustrated and described in more detail later with respect to Figs. 3a to 3d.

Further, the linear motor conveying system 100 can comprise, in an embodiment, a controlling system 190 for controlling the linear motor conveying system 100 to move the carrier modules 150 within the track modules, i.e., in moving or conveying direction R, indicated in Fig. 1. It is noted that such conveying direction R is a straight line for straight modules, but it is a curved line for curved modules. For operating the linear motor conveying system 100, by means of the controlling system 190, electro-magnetic motor components, for example, at the track modules, have to be controlled.

Fig. 2 schematically illustrates a track module 203 according to an embodiment in a perspective view. Track module 203 is a switch module. Contrary to straight modules or curve modules, the carrier module is not restricted to move from one of two ends to the other of the two ends, i.e., enter the track module at a first end and leave the track module at a second end (having a single conveying path). Rather, the carrier module can enter the switch module at a first end 215.1 and leave the switch module at either a second end 215.3 or at a third end 215.3. The switch module 203 has two conveying paths P1 and P2, where conveying path P2 diverts from conveying path P1.

In order to control a linear motor conveying system comprising such switch module, to make the carrier module using conveying path P1, leaving at the second end 215.2 or using conveying path P2, leaving at the third end 215.3, electro-magnetic motor components, for example, at the track modules (not shown here), are to be controlled such that the carrier module is forced either to the second end 215.2 or to the third end 215.3. If the carrier module enters the switch module at the second end 215.2 or at the third end 215.3, in both cases, the carrier module will leave the switch module 203 at the first end 215.3. In other words, both conveying paths P1, P2 are merged.

Similar to the straight modules and curve modules shown in Fig. 1, the switch module 203 comprises a track component 210 for a conveying path, e.g., P1. The switch module 203 further comprises at least two bearing surfaces 231, 232. By means of example, six bearing surfaces are shown in Fig. 2, while only two of them are indicated with a reference numeral.

Further, the track component 210 comprises, along the conveying path P1, a first side part 211, a second side part 212 and a bottom part 213, wherein the first side part 211 and the second side part 213 are arranged opposite to each other. It is noted that the second side part 211 is interrupted along the conveying path P1, due to a diversion of conveying path P2. Similar to the conveying path P1, the track component comprises, along the conveying path P2, a first side part, a second side part and a bottom part (not indicated with reference numerals here).

Switch modules like the one shown in Fig. 2, can be used together with straight modules and curve modules like the one shown in Fig. 1, in order to create a (complex) track system and linear motor conveying system. It should be considered, that the bearing surfaces of the different track modules should be of the same type.

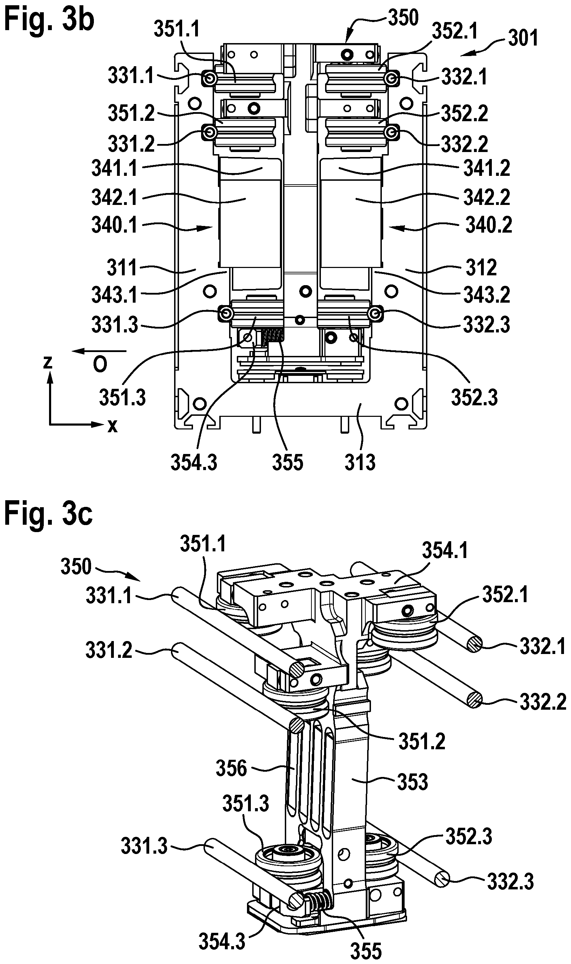

Fig. 3a illustrates a track module 301 and a carrier module 350 in a perspective view. Fig. 3b illustrates the track module 301 and the carrier module 350 of Fig. 3a in a cross section in the x-y-plane. Fig. 3c illustrates the carrier module 350 of Fig. 3a in a perspective view but without most parts of the track module. Figs. 3a, 3b and 3c shall be described together in the following. It is noted that the axes could also be defined different, e.g., with the conveying direction in the x-direction.

By means of example and for explanation of the basic structure and composition of a track module, track module 301 is a straight module. Track module 301 can correspond to track module 101 of Fig. 1, however, showing additional components. The following explanations apply also to other types of track modules.

The track module 301 comprises a track component 310, and, by means of example, six bearing surfaces 331.1, 331.2, 331.3, 332.1, 332.2, 332.3. Further, the track component 301 comprises, along a conveying path, a first side part 311, a second side part 312 and a bottom part 313, wherein the first side part 311 and the second side part 313 are arranged opposite to each other. The conveying path is not denoted in Fig. 3a, but extends along the y-direction and can be similar or equal to conveying path P shown in Fig. 1.

Three first bearing surfaces (here, e.g., bearing surfaces 331.1, 331.2, 331.3) are arranged at or formed integrally with the first side part 311, and three second bearing surfaces (here, e.g., bearing surfaces 332.1, 332.2, 332.3) are arranged at or formed integrally with the second side part 312, such that the at first bearing surfaces 331.1, 331.2, 331.3 and the second bearing surfaces 332.1, 332.2, 332.3 face each other, i.e., are oriented towards each other. In other words, all of the bearing surfaces are provided at an inner side of the respective first and second side parts, where the conveying path is formed.

By means of example, the bearing surfaces are formed by support structures like rods, arranged in or inserted into recesses in the first side part 311 and the second side part 312. In general, however, such bearing surface can also be formed by the first side part 311 and the second side part 312, e.g., by having specific shapes.

In an embodiment, the track 301 further comprises two electro-magnetic motor components, a first electro-magnetic motor component 340.1 and a second electro-magnetic motor component 340.2. The first electro-magnetic motor component 340.1 and the second electro-magnetic motor component 340.2 extend along the conveying path (here: in y-direction). The first electro-magnetic motor component 340.1 is arranged at the first side part 311, and the second electro-magnetic motor component 340.2 is arranged at the second side part 312, such that the first electro-magnetic motor component 340.1 and the second electro-magnetic motor 340.2 component face each other.

In an embodiment, the first electro-magnetic motor component 340.1 comprises one or more electric coils 341.1 (actually covered by epoxy in this Fig.); a number of the electric coils can depend on the way how the coils are manufactured. Further, the first electro-magnetic motor component 340.1 can comprise one or more magnetic or ferromagnetic cores or a structured magnetic core 342.1, e.g., made of iron. Such magnetic or ferromagnetic core increases the magnetic forces produced by the electric coils. Further, the first electro-magnetic motor component 340.1 can comprise a holding or fixing structure 343.1 (only schematically illustrated for fixing the coils and magnetic core to the first side part 311. The first electro-magnetic motor component 340.1 can be fixed to the first side part 311 by means of gluing and/or screwing, for example.

Similarly, the second electro-magnetic motor component 340.2 comprises one or more electric coils 341.2; a number of the electric coils can depend on the way how the coils are manufactured. Further, the second electro-magnetic motor component 340.2 can comprise one or more magnetic or ferromagnetic cores or a structured magnetic core 342.2, e.g., made of iron. Such magnetic or ferromagnetic core increases the magnetic forces produced by the electric coils. Further, the second electro-magnetic motor component 340.2 can comprise a holding or fixing structure 343.2 for fixing the coils and magnetic core to the second side part 312. The second electro-magnetic motor component 340.2 can be fixed to the second side part 312 by means of gluing and/or screwing, for example.

In an embodiment, the bottom part 313 is configured to be placed on and/or to be oriented towards and/or to be mounted to a ground surface. Such ground surface would be below the bottom part 313, seen in z-direction in Figs. 3a, 3b. In an embodiment, the bottom part 313 comprises one or more holes facing the ground surface. This allows for cleaning out small piece of debris. Also, any fluid, e.g., water, is allowed to drain when used in an IP65 type of environment, for example.

The track module 301 is configured to receive a carrier module 350 between the first side part 311 and the second side part 312 and is, preferably, configured such that the first bearing surfaces 332.1, 332.2, 332.3 match with respective first wheels of the carrier module 350, and that the second bearing surfaces 332.1, 332.2, 332.3 match with respective second wheels of the carrier module 350.

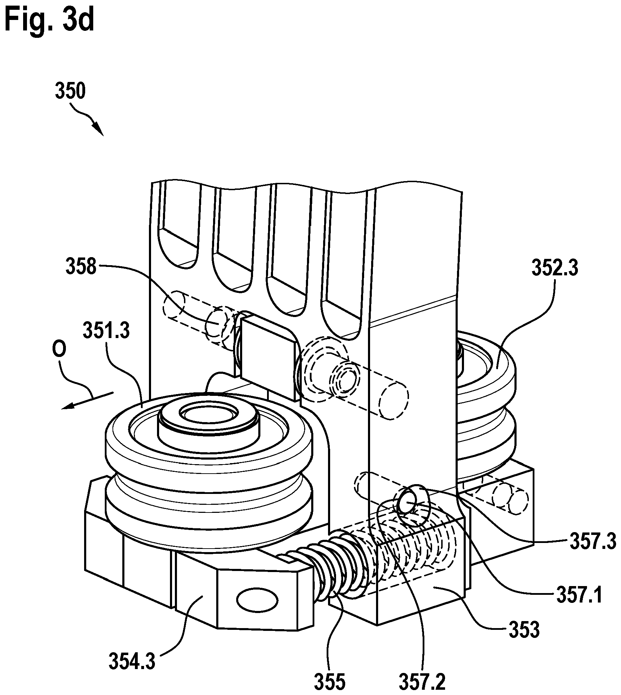

While Figs. 3a, 3b shown the carrier module 350 being received in the track module 301, Fig. 3c shows the carrier module 350 as such, and Fig. 3d showing part of the carrier module in more detail. In addition, Fig. 3c shows the six bearing surfaces 331.1, 331.2, 331.3, 332.1, 332.2, 332.3 (these are rods, in this example). The carrier module 350 comprises a carrier component 353 and, by means of example, six wheels, three first wheels 351.1, 351.2, 351.3, and three second wheels 352.1, 352.2, 352.3 (note that wheel 352.2 is not visible in Fig. 3c). The carrier module 350 is configured to be received between the first side part 311 and the second side part 312 of the track module 301.

By means of example, three first wheels 351.1, 351.2, 351.3 and the three second wheels 352.1, 352.2, 352.3 are arranged at the carrier component 353 opposite to each other, such that three first wheels 351.1, 351.2, 351.3 face the first side component 311 and the three second wheels 352.1, 352.2, 352.3 face the second side component 312, when received in the track module 301. This can be seen in Figs. 3a, 3b. Each of the wheels 351.1, 351.2, 351.3, 352.1, 352.2, 352.3 matches with a respective one of the six bearing surfaces 331.1, 331.2, 331.3, 332.1, 332.2, 332.3. This can be seen in Fig. 3c. With respect to the bearing surface and the wheels, matching means that a wheel can be guided by and roll on a respective bearing surface. A bearing surface could, thus, also be called a rolling surface. The wheels, for example, can comprise a groove matching with the bearing surface (or guide rail).

Such groove, in connection with the rod-shape of the bearing surfaces, results in that the wheels are configured such that they are not movable with respect to a respective bearing surface at the respective first side part or second side part of said track module, along a height direction (here: along z-direction) and when in contact with the respective bearing surface. This can clearly be seen in Fig. 3c.

In an embodiment, the carrier module 350 further comprises two counterpart electro-magnetic motor components, a first counterpart electro-magnetic motor component 356 (shown in Fig. 3c) and a second counterpart electro-magnetic motor component (not visible in Fig. 3c). Each of such counterpart electro-magnetic motor component can comprise one or more permanent magnets, for example. The first counterpart electro-magnetic motor component 356 and the second counterpart electro-magnetic motor component 356 are arranged at the carrier component 353 opposite to each other, such that the first counterpart electro-magnetic motor component 356 faces the first electro-magnetic motor component 340.1 of the track module 301 and that the second counterpart electro-magnetic motor component faces the second electro-magnetic motor component 340.2 of the track module 301, when received in the track module 301. This can be seen in Fig. 3a.

The first counterpart electro-magnetic motor component 356 matches with the first electro-magnetic motor component 340.1, i.e., these two components electro-magnetically interact with each other in order to from a linear electro-magnetic motor. This also, typically, requires an air gap of appropriate size between these two components. Similarly, the second counterpart electro-magnetic motor component matches with the second electro-magnetic motor component 340.2, i.e., these two components electro-magnetically interact with each other in order to from a linear electro-magnetic motor. This also, typically, requires an air gap of appropriate size between these two components. Thus, the track module 301 allows receiving a state of levitation of the carrier module 350 between the two side parts of the track module 301 (in addition to the support by the wheels).

As can be seen Figs. 3b, 3c, the three first bearing surfaces 331.1, 331.2, 331.3 are arranged one above the other, seen in the z-direction (which direction is orthogonal to the conveying direction, and is a height direction here). This holds also true for the corresponding second bearing surfaces.

Similarly, as can be seen Figs. 3b, 3c, the three first wheels 351.1, 351.2, 351.3 are arranged one above the other, seen in the z-direction (which direction is orthogonal to the conveying direction). This holds also true for the corresponding second wheels.

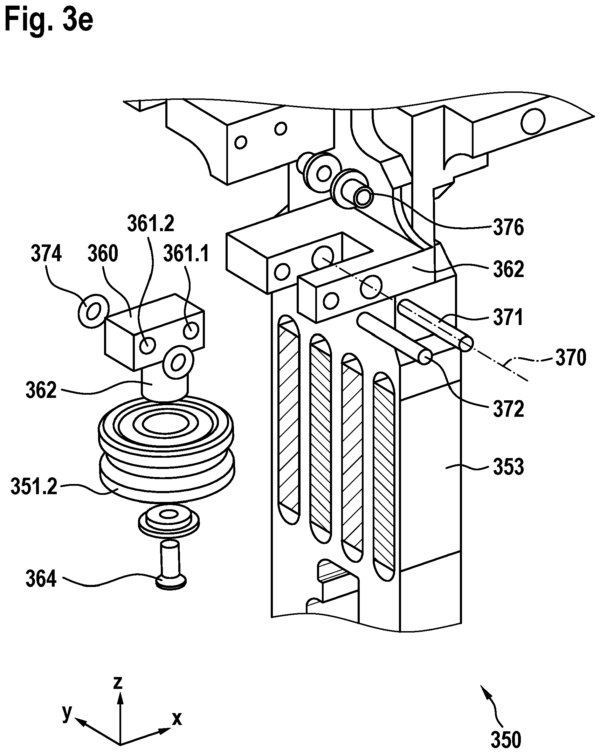

By means of example, all wheels are pivotable wheels, with an wheel support means provided for each wheel; this will be described in more detail with respect to Figs. 3e to 3g.

Further, by means of example, the carrier module 350 is configured to push the lower first wheel 351.3, in an outward direction O, towards the respective first side component 311, and away from the corresponding lower second wheel 352.3 that is arranged opposite. By means of example, carrier module 350 further comprises a spring means, e.g., a compression spring 355 (see Fig. 3b). The compression spring 355 is arranged at the carrier component 353 such as to provide a pre-tension force to the lower first wheel 351.3, a pre-tensioned wheel.

The carrier component 353 comprises an additional wheel support means 354.3, wherein the lower first wheel 351.3 is pivotally supported by means of the wheel support means 354.3, e.g., about axis (or bearing) 358. Axis 358 can be parallel to the conveying direction; it is noted that axis 358 does not need to be parallel to the conveying direction. The compression spring 355 is arranged such as to provide the pre-tension force to pivot the lower first wheel 351.3 via the additional wheel support means 354.3. In this example, the compression spring 355 is located below (seen in vertical direction) the axis 358, thus the pre-tension force pivots the lower first wheel 351.3 upwards, at the side where the wheel is contact the bearing surface. Another arrangement might result in pivoting the wheel downwards.

Further, the carrier module 350 comprises an outward stroke, configured to limit a movement of the pre-tensioned wheel in the outward direction O. Further, the carrier module 350 also comprises an inward stroke, configured to limit a movement of the pre-tensioned wheel in inward direction, wherein the inward direction is opposite to the outward direction O. By means of example, these strokes are formed by having a dowel pin 357.1 fixed to the wheel support means 354.3 and provided inside a bore hole that has an outward edge 357.2 and an inward edge 357.3. The dowel pin 357.1 is movable within this hole but limits the movement of the wheel when abutting the outward edge 357.2 or the inward edge 357.3. Instead of such dowel pin, other means can be used, e.g., screws that allow fine adjustment of the strokes.

Whereas the lower first wheel 351.3 is pivotable about the axis 358, which is parallel to the conveying direction, via the wheel support means 354.3 and is also pre-tensioned, all other wheels are also be mounted pivotable about an axis, which is parallel to the conveying direction, as will be described in more detail below. It is noted that the conveying direction is, in this example, along y-direction.

Further, from Fig. 3d it can be seen that the wheels (be it the pre-tensioned one or the other ones) are rotatable about a vertical axis, which allows smooth movement of the wheels along the bearing surfaces.

The carrier component 353 an comprise a wheel support means 354.3, wherein the lower first wheel 351.3 is pivotally supported by means of the wheel support means 354.3, e.g., about axis (or bearing). The compression spring 355 is arranged such as to provide the pre-tension force to pivot the lower first wheel 351.3 via the wheel support means 354.3.

Whereas the lower first wheel 351.3 is pivotable about an axis, which is parallel to the conveying direction, via the wheel support means 354.3 and is also pre-tensioned, all other wheels can also be mounted pivotable about an axis, which is parallel to the conveying direction, however, without the pre-tension. It is noted that the conveying direction is, in this example, along y-direction.

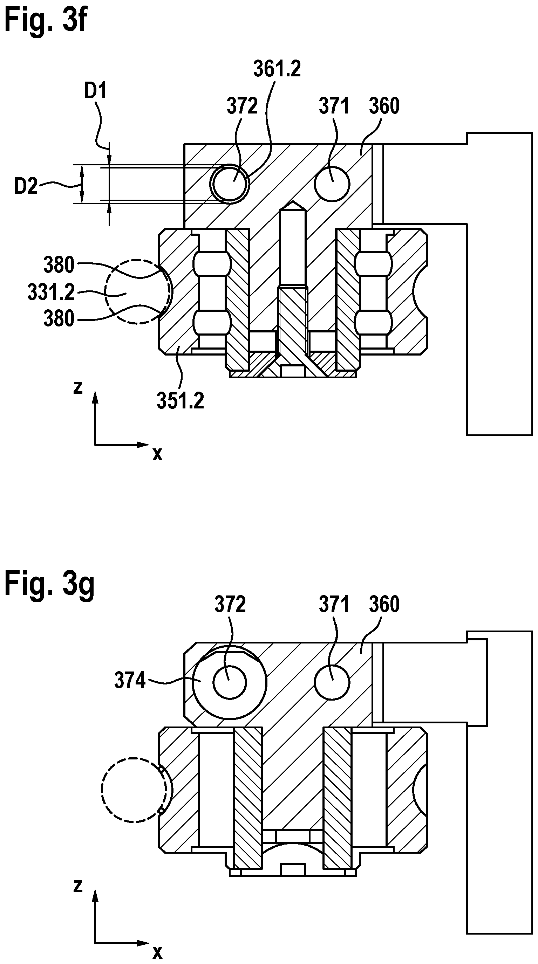

Fig. 3e shows part of the carrier module 350 in an exploded view. In particular, wheel 351.2 is shown to illustrate a pivotable wheel. It is noted that each of the wheels of the carrier module 350 can be such pivotable wheel, including the pre-tensioned wheel 351.3. Figs. 3f, 3g show more detailed views of the pivotable wheel, however in cross sections and non-exploded view.

The carrier module 350 comprises, for pivotable wheel 351.2, a wheel support means 360. The wheel 351.2 is supported at the wheel support means 362, such that a rolling motion of the wheel is possible. By means of example, the wheel support means 360 comprises a rod-shaped bearing support 362, on which the wheel 351.2 is rotatably supported. A screw 364 can be provided to fix the wheel on the bearing support 362, for example. In addition, a bushing or the like can be provided.

Further, wheel support means 360 is supported at the carrier component 353 or at a part thereof. In the example shown, the wheel support means 360 is supported at a leg 362 of the carrier component 353. The support is such that the wheel support means 360 - and, thus, the wheel 351.2 - is pivotable about a pivot axis 370 within a pre-defined pivot range. Said pivot axis 370 is parallel to the conveying direction (which is in y direction here). The carrier module comprises a first dowel pin 371, wherein said wheel support means 360 is supported at the carrier component by means of said first dowel pin 371 so as to be pivotable about said pivot axis 370. Further, bushings 376 can be provided at the first dowel pin, for example. The first dowel pin 371 is also supported and/or fixed at the carrier component 353 or its leg 362, e.g., by means of press fit.

The carrier module further comprises a second dowel pin 372, wherein said wheel support means 360 comprises a through hole 361.2, in which the second dowel pin 372 is provided. The second dowel pin 372 is also supported and/or fixed at the carrier component 353 or its leg 362, e.g., by means of press fit.

The pre-defined pivot range is shown in Fig. 3f, which shows a diameter D1 of the second dowel pin 372 and a diameter D2 of the through hole 361.2. The diameter D2 of the through hole is larger than a diameter D1 of the second dowel pin. In this way, the dowel pin can move but is limited by the stops formed by the through hole. The difference between these diameters defines the pre-defined pivot range. By choosing appropriate diameters, the pre-defined pivot range can be chosen according to needs.

Thus, when the wheel 351.2 is in contact with the bearing surface or rod 331.2, here at two contact points 380, a movement of the carrier module is possible via pivoting about the pivot axis 370.

As mentioned, also the pre-tensioned wheel 351.3 shown in Fig. 3d can be a pivotable wheel. In this case, the wheel support means (like the wheel support means 360 of Fig. 3e) can be supported in the additional wheel support means 354.3. In this case, the wheel support means is supported or indirectly at the carrier component, whereas for the other wheels, the wheel support means is supported directly at the carrier component.

In this way, the amount of constrained degrees of freedom for the carrier module having six wheels can be reduced from twelve to five.

Further, the carrier module comprises elastic means, exemplarily shown as two O-rings 374, provided between the second dowel pin 372 and the wheel support means 360, and configured to provide a pre-tension force to the wheel support means. In Fig. 3e, both O-rings are shown, and in Fig. 3g a cross section with one O-ring 374 is shown. Fig. 3g illustrates that by means of such O-rings, a preload or force can be provided to the wheel in order to get a pre-defined orientation while the carrier module is switching in a track module of the switch type.

## Claims

1. A carrier module (350) for a linear motor conveying system, wherein said carrier module comprises a carrier component (353) and at least two wheels (351.1, 351.2, 351.3, 352.1, 352.2, 352.3),
wherein said carrier module (350) is configured to be received between a first side part and a second side part of a track module (101, 102.1, 102.2, 102.3, 102.4, 203, 301),
wherein said carrier module is movable in a conveying direction (R) when received in the track module,
wherein at least a first one of the at least two wheels and at least a second one of the at least two wheels are arranged at the carrier component opposite to each other, such that the at least one first wheel faces the first side component and the at least one second wheel faces the second side component, and match with a respective bearing surface of the track module, when received in the track module,
wherein one or more of the at least two wheels are pivotable wheels,
wherein the carrier module (350) comprises, for the one or each of the more pivotable wheels, a wheel support means (360),
wherein the wheel (351.2) is supported at the wheel support means (360), such that a rolling motion of the wheel is possible, and
wherein said wheel support means (360) is supported, directly or indirectly, at the carrier component (353) so as to be pivotable about a pivot axis (370) within a pre-defined pivot range, said pivot axis (370) being parallel to the conveying direction (R).

2. The carrier module (350) of claim 1, further comprising, for the one or each of the more pivotable wheels, a first dowel pin (271), wherein said wheel support means is supported at the carrier component by means of said first dowel pin so as to be pivotable about said pivot axis.

3. The carrier module (350) of claim 1 or 2, further comprising, for the one or each of the more pivotable wheels, a second dowel pin (372), wherein said wheel support means comprises a through hole (361.2), in which the second dowel pin is provided, wherein a diameter (D2) of the through hole is larger than a diameter (D1) of the second dowel pin, such that said wheel support means is pivotable about said pivot axis within said pre-defined pivot range.

4. The carrier module (350) of claim 3, further comprising, for the one or each of the more pivotable wheels, elastic means (374), provided between the second dowel pin and the wheel support means, and configured to provide a pre-tension force to the wheel support means.

5. The carrier module (350) of claim 4, wherein the elastic means comprises two O-rings provided on the second dowel pin, each between a part of the wheel support means and a part of the carrier component.

6. The carrier module (350) of any one of the preceding claims, configured to push a pre-tensioned one (351.3) of the at least one first wheel and the at least one second wheel, in an outward direction (O), towards a respective one of the first side component and the second side component, and away from the other one of the at least one first wheel and the at least one second wheel that is arranged opposite.

7. The carrier module (350) of claim 6, comprising, for said pre-tensioned wheel, an additional wheel support means (354.3) carrying the pre-tensioned wheel (351.3), wherein the pre-tensioned wheel is pivotally supported by means of the additional wheel support means, said additional wheel support means being supported at the carrier component.

8. The carrier module (350) of claim 6 or 7, wherein the pretensioned wheel is the one or one of the more pivotable wheels.

9. The carrier module (350) of claims 7 and 8, wherein, for the pretensioned wheel, the wheel support means is supported at the additional wheel support means.

10. The carrier module (350) of any one of the preceding claims, comprising six wheels, wherein each of the six wheels is a pivotable wheel.

11. A linear motor conveying system (100), comprising one or more track modules and one or more carrier modules of any one of the preceding claims, said one or more carrier modules to be guided in the one or more track modules,
wherein said one or each of said more track modules is configured to receive a carrier module (350, 450) between a first side part (111, 311) and a second side part (112, 312), and
wherein the one or each of the more carrier systems (480) or their respective carrier modules are received or receivable in the one or each of the more track modules.

12. The linear motor conveying system (100) of claim 11, wherein said one or each of said more track modules comprises a track component, and at least two bearing surfaces,
wherein said track component comprises, along at least part of a conveying path (P, P1, P2), the first side part (111, 311), the second side part (112, 312) and a bottom part (113, 313), wherein the first side part and the second side part are arranged opposite to each other,
wherein at least a first one (131, 331.1, 331.2, 331.3) of the bearing surfaces is arranged at or formed integrally with the first side part (111, 311), and at least a second one (132, 332.1, 332.2, 332.3) of the bearing surfaces is arranged at or formed integrally with the second side part (112, 312), such that the at least one first bearing surface and the at least one second bearing surface face each other.
